# EUROPEAN PATENT APPLICATION

(11) **EP 4 098 629 A1**
(43) Date of publication of application: **07.12.2022**
(21) Application number: 21205408.4
(22) Date of filing: 28.10.2021
(51) Int. Cl.: C03C 12/02, C03C 3/089, C03C 11/00, C03C 25/26, C03C 25/285, C03C 25/305, C03C 25/323, C03C 25/326, C03C 25/36, C09D 5/33, C09D 5/29, C09D 5/32, C03C 17/00, C03C 17/02, C03C 17/32

(54) **A WHITE COATING MATERIAL, AN INTELLIGENT THERMOCHROMIC COATING MATERIAL AND A COATING LAYER**

(30) Priority: 02.06.2021 CN 202110613415; 11.06.2021 WO PCT/CN2021/099682
(71) Applicant: Fudan University, Shanghai 200433 (CN)
(72) Inventor: WU, Limin, Shanghai (CN); WANG, Tong, Shanghai (CN); CHEN, Min, Shanghai (CN)
(74) Representative: Taor, Simon Edward William

(57) **Abstract**

The present invention belongs to the technical field of functional coatings and thin films, and provides a white coating material, an intelligent thermochromic coating material and a coating layer. The white coating material comprises 10 wt% ∼ 70 wt% hollow glass beads and 30 wt% ∼ 90 wt% resin; The intelligent thermochromic coating material comprises 10 ∼ 70 parts by weight of hollow glass beads, 30 ∼ 90 parts by weight of resin and 0.5 ∼ 5 parts by weight of reversible thermochromic microcapsules. Due to the rich multi-level cavity structure of HGBs and the ideal inherent characteristics of the polymer, the average reflectivity of the coating layer in the solar spectrum range is as high as ∼0.96, and the long-wave infrared emissivity can be as high as ∼0.95. The optical properties, whiteness, hiding power, etc. are better than traditional white coating materials based on titanium dioxide. Not only is it non-toxic, environmentally friendly, and low in cost, but the film also has an obvious cooling effect. The coating layer added with a small amount of reversible thermochromic microcapsules can switch freely between ultra-white and color as the ambient temperature changes. Therefore, intelligent adjustment of solar heating and passive radiative cooling is achieved.

## Description

### Field of the Invention

The present invention belongs to the technical field of functional coating layers and thin films, and specifically relates to a white coating material, an intelligent thermochromic coating material and a coating layer.

### Background of the Invention

Titanium dioxide (TiO₂) has very important application value in industries such as coating layers, plastics, paper, ink, chemical fiber, rubber, ceramics, cosmetics and etc. because of its high refractive index, good whiteness and brightness, and excellent hiding power and tinting power. However, there are also a series of problems: (1) the price of titanium dioxide is relatively high and has been rising successively in recent years. The supply chain is continuously under tension due to the exuberant downstream demand. (2) The production process of titanium dioxide often causes a lot of environmental pollution. (3) Titanium dioxide's inherent absorption of ultraviolet light and violet light makes the overall solar reflectance low, which hinders its application in building cooling. (4) On February 18th, 2020, the European Union officially issued an official authorization regulation (CLP Regulation (EC) No. 1272/2008), classifying TiO₂ as a category 2 suspected carcinogen (by inhalation), which will have a huge impact on titanium dioxide and its upstream and downstream industries. Therefore, it is urgent to find a cheap, environmentally friendly substitute with good optical performance for titanium dioxide.

In recent years, daytime passive radiant cooling (PDRC) technology has attracted widespread attention from researchers because of its potential to reduce or replace traditional electric refrigeration systems. Some advanced PDRC designs show excellent cooling performance, but they often require the use of complex and expensive processing equipment in the production process, which is not suitable for large-scale promotion. Therefore, research and development of PDRC materials that are simple, economical, efficient, and can be produced on a large scale are currently a major challenge.

### Summary of the Invention

The present invention was made to solve the above technical problems. The objective of the present invention is to provide a white coating material, an intelligent thermochromic coating material and a coating layer.

The present invention provides a white coating material, characterized by comprising 10 wt% ∼ 70 wt% hollow glass beads; and 30 wt% ∼ 90 wt% resin.

Further, the white coating material is characterized by that: wherein the diameter of the hollow glass beads ranges in 2 µm ∼ 30 µm, the main component of the hollow glass beads is soda-lime borosilicate glass.

Further, the white coating material is characterized by that: wherein the resin is water-soluble resin or solvent-based resin.

Further, the white coating material is characterized by that: wherein the resin is any one or more of polydimethylsiloxane, polyurethane, polyacrylate, polymethylmethacrylate, epoxy resin, polyvinylidene fluoride, polytetrafluoroethylene and silicone resin.

The present invention also provides a coating layer, characterized by that: the white coating material is coated on the surface of a substrate material to form the coating layer, wherein the average solar reflectance of the coating layer ≥ 0.90, the longwave infrared emissivity ≥ 0.90, its own temperature is 3°C∼8°C lower than the ambient temperature at night, and its own temperature is 2°C∼7°C lower than the ambient temperature at noon.

The present invention also provides an intelligent thermochromic coating material, characterized by that: comprising 10 - 70 parts by weight of hollow glass beads; 30 ∼ 90 parts by weight of resin; and 0.5 ∼ 5 parts by weight of reversible thermochromic microcapsules.

Further, the intelligent thermochromic coating material is characterized by that: wherein the diameter of the hollow glass beads ranges in 2 µm ∼ 30 µm, the main component of the hollow glass beads is soda-lime borosilicate glass.

Further, the intelligent thermochromic coating material is characterized by that: wherein the resin is water-soluble resin or solvent-based resin.

Further, the intelligent thermochromic coating material is characterized by that: wherein the intelligent thermochromic coating material further comprises other fillers, the fillers are any one or more of barium sulfate, calcium carbonate, lithopone, talcum powder or titanium dioxide.

The present invention also provides a coating layer, characterized by that: the intelligent thermochromic coating material is coated on the surface of a substrate material to form the coating layer, wherein the coating layer switches between ultra-white and color as the ambient temperature changes to realize intelligent cooling/heating.

According to the white coating material, the intelligent thermochromic coating material and the coating layer provided by the present invention, the hollow glass beads are mixed with the resin, and the resin is used as a binder. And the hollow glass beads are uniformly dispersed in the resin. Hollow glass beads (HGBs) can effectively scatter sunlight and increase the heat emissivity because of their rich multi-level cavity structure. Their optical properties, whiteness, hiding power, etc. are better than traditional white coating materials based on titanium dioxide. Besides, the ideal inherent characteristics of the polymer itself, such as almost no absorption of sunlight, various functional groups and their vibration modes will cause a large number of infrared absorption/emission peaks, which can enhance the material's emissivity at long-wave infrared. Therefore, the prepared polymer-based HGBs film (i.e., coating layer) has an average reflectivity of about 0.96 in the solar spectrum, and a long wave infrared emissivity of about 0.95. It is superior to commercial white coating materials based on titanium dioxide in terms of optical performance, whiteness, hiding power, etc. Not only is it non-toxic, environmentally friendly, and low in cost, but the film also has an obvious cooling effect. At night, its own temperature can be 3 °C ∼ 8 °C lower than the ambient temperature. At noon, it can still cool down by 2 °C ∼ 7 °C under direct sunlight.

Besides, due to the temperature-sensitive properties of the reversible thermochromic microcapsules, the coating layer prepared by adding the reversible thermochromic microcapsules (i.e., thermochromic coating layer) can switch between ultra-white and color freely with the change of ambient temperature. It not only gives the traditional radiant cooling material a more ornamental appearance, but also realizes the intelligent adjustment of the dual modes, which is solar heating and passive radiant cooling. When the ambient temperature is lower than the critical color-change temperature of the thermochromic microcapsules, the coating layer presents a colorful appearance and selectively absorbs visible light of a specific wavelength, thereby heating itself. When the ambient temperature is higher than the critical color-change temperature of the thermochromic microcapsules, the coating layer presents an ultra-white appearance, highly reflects the entire wavelength of sunlight, and radiates infrared heat, thereby cooling itself.

The invention adopts a simple blending method to blend environmentally-friendly and inexpensive hollow glass beads with resin to obtain a coating layer dispersion system, which is coated on plastic, glass, wood, metal, concrete and other substrate materials to prepare a film. The preparation process is simple, the raw materials are environmentally friendly and low in price, the production cost is low, and it can be prepared on a large scale. It is suitable for all kinds of common water-based and solvent-based resin systems. The prepared film has excellent passive radiation cooling performance. As a new type of refrigeration technology, it is expected to reduce or replace traditional electric cooling systems.

### Brief Description of the Drawings

Fig. 1 shows the scanning electron micrograph of HGBs and PDMS/HGBs composite films in embodiment 1.
Fig. 2 shows the macro photo of PDMS/HGBs composite film in embodiment 1.
Fig. 3 shows the reflectance spectrum of PDMS/HGBs composite film at 0.3-16 µm wavelength in embodiment 1.
Fig. 4 shows the solar reflectance spectra of PDMS/HGBs/CMs composite film under cooling and heating conditions in embodiment 1.
Fig. 5 shows the temperature tracking curve of environment, PDMS/HGBs and PDMS/HGBs/CMs composite film in embodiment 1.
Fig. 6 shows the temperature tracking curve of environment, PDMS/HGBs and PDMS/HGBs/CMs composite film in embodiment 3.

### Detailed Description of the preferred embodiments

In order to make the technical means, creative features, objectives and effects of the present invention easy to understand, a white coating material, an intelligent thermochromic coating material, a coating layer and their preparation methods of the present invention are further described in the following embodiments.

Meanwhile, all the procedures in the following embodiments are normal methods and all raw materials are from commercial access unless otherwise specified.

The present invention provides a white coating material comprising 10 wt% ∼ 70 wt% hollow glass beads; and 30 wt% - 90 wt% resin.

The intelligent thermochromic coating material of the present invention can be obtained by adding reversible thermochromic microcapsules into the white coating material. The intelligent thermochromic coating material comprises the following components in parts by weight: 10 - 70 parts by weight of hollow glass beads; 30 - 90 parts by weight of resin; 0.5 - 5 parts by weight of reversible thermochromic microcapsules.

Other fillers can be added to the white coating material and the intelligent thermochromic coating material with reversible thermochromic microcapsules provided by the present invention.

The present invention also provides a coating layer, a film, and a preparation method thereof, and the preparation method specifically comprises: the white coating material or the intelligent thermochromic coating material is coated on the surface of a substrate material to form the coating layer. And if the coating layer is peeled off the surface of the substrate material, a corresponding film can be obtained.

The preparation method of the coating layer and the film provided by the invention can also comprise the following steps:
step 1. mixing 10 - 70 wt% of hollow glass micro-beads and 30 - 90 wt% of resin into dispersion liquid;
step 2. coating the dispersion liquid on a substrate sheet to obtain a coating layer, if the composite coating layer is peeled off the substrate sheet after drying, a thin film can be obtained.
Or:
step 1. mixing 10 ∼ 70 parts of hollow glass beads, 30 ∼ 90 parts of resin and 0.5 ∼ 5 parts of reversible thermochromic microcapsules into dispersion liquid;
step 2. coating the dispersion liquid on a substrate sheet to obtain a coating layer, if the composite coating layer is peeled off the substrate sheet after drying, a thin film can be obtained.

When 10 wt% ∼ 70 wt% hollow glass beads are mixed with 30 wt% ∼ 90 wt% resin in step 1 to form a dispersion liquid, the prepared coating layer is an ultra-white coating layer, and the stripped film is an ultra-white film. The average solar reflectance of the ultra-white coating layer ≥ 0.90, the longwave infrared emissivity of the coating layer ≥ 0.90, its own temperature is 3°C∼8°C lower than the ambient temperature at night, and its own temperature is 2°C∼7°C lower than the ambient temperature at noon.

When the reversible thermochromic microcapsules with cold-activated thermochromic function are added in step 1, a thermochromic coating layer that switches between ultra-white and color as the ambient temperature changes is obtained. Correspondingly, the peeled film is a thermochromic film.

In step 1, the mixing method is any one of magnetic stirring, mechanical stirring, homogenization, and ultrasound. In step 2, the coating method is any of pouring, spraying, roll coating or spin coating. In step 2, the material of the substrate sheet is any of plastic, glass, wood, metal, concrete, paper, etc.

In the above preparation method, a suitable solvent is selected according to the viscosity of the resin. If the resin is a water-soluble resin, use water as the solvent, and if the resin is a solvent resin, select the corresponding organic solvent that can dissolve the resin as the solvent. The amount of solvent added is related to the viscosity of the resin, and the amount of addition needs to be such that the viscosity of the dispersion liquid is determined.

In the above preparation method of the white coating material and the intelligent thermochromic coating material, other fillers are any one or more of barium sulfate, calcium carbonate, lithopone, talc or titanium dioxide for blending and doping. In the present invention, other fillers are not limited to the above-mentioned examples, and fillers that do not affect the performance of the intelligent thermochromic coating material and coating layer may be used.

The above hollow glass beads have a diameter of 2 µm ∼ 30 µm, and the main component is soda-lime borosilicate glass. The critical color-change temperature of the reversible thermochromic microcapsules is 15°C ∼ 30°C.

The resin is a water-soluble resin or a solvent-based resin, specifically, it can be any one or more of polydimethylsiloxane (PDMS), polyurethane (PU), polyacrylate (PA), polymethylmethacrylate (PMMA), epoxy resin (EP), polyvinylidene fluoride (PVDF), polytetrafluoroethylene (PTFE) and silicone resin.

### Embodiment 1

First weigh 5g polydimethylsiloxane prepolymer (PDMS, SYLGARD 184), 0.5g curing agent (SYLGARD 184) and 5g HGBs, put them in 10g of toluene solvent, and stir magnetically for 2h at room temperature to obtain a dispersion liquid of PDMS/HGBs/toluene; Then, apply the above dispersion liquid to the aluminum plate or glass plate by roll coating. After the solution is leveled, place it in an oven at 100 °C for drying, and take it out after 2 hours to obtain a PDMS/HGBs composite coating layer; Finally, peel off the PDMS/HGBs composite coating layer from the substrate sheet to obtain the PDMS/HGBs composite film. For the preparation of PDMS/HGBs/CMs composite film, only need to add 0.2g of CMs ((critical color-change temperature is 25 °C, color is sky blue)) to the dispersion liquid of PDMS/HGBs/toluene, and the other steps are the same.

The incubator device for the cooling temperature test is built using insulated medium-density polystyrene foam and highly reflective aluminum foil. Place a composite film sample with a length and width of ∼ 100 mm and a thickness of ∼ 800 µm in the middle of the incubator. Then, put a sticky thermometer probe close to the back of the sample to test the temperature of the film sample. Another probe is placed on the outside of the incubator to test the ambient temperature. Record a data point every 10s.

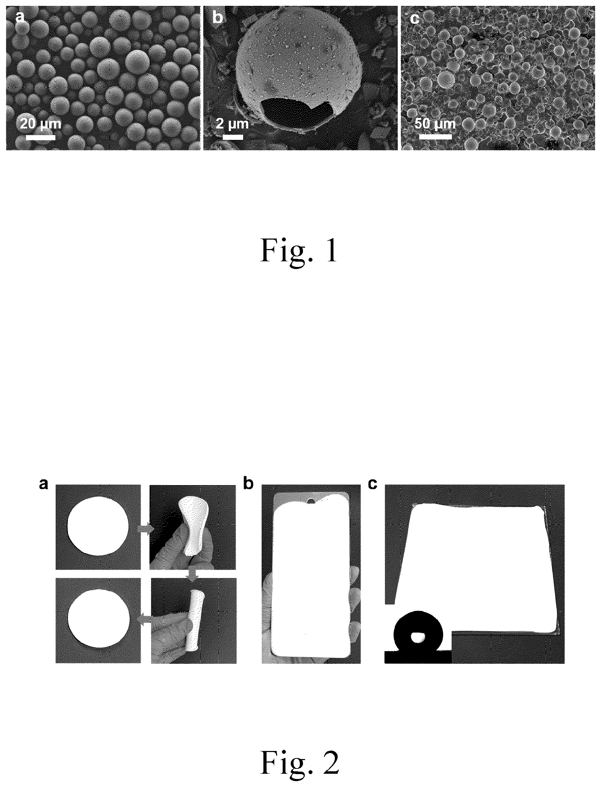

Fig. 1 shows the scanning electron micrograph of HGBs and PDMS/HGBs composite films in embodiment 1, wherein Fig. 1(a) and Fig. 1(b) are scanning electron micrographs of HGBs at different magnifications, and Fig. 1(c) is a scanning electron micrograph of PDMS/HGBs composite film.

As shown in Fig. 1, HGBs have a regular spherical appearance and obvious cavity structure, with an average particle size of about 10 µm, which can be evenly dispersed in the PDMS matrix.

Fig. 2 shows the macro photo of PDMS/HGBs composite film in embodiment 1, wherein Fig. 2(a) shows the photo of PDMS/HGBs composite film under various deformations, Fig. 2(b) shows the photo of PDMS/HGBs composite coating layer film on aluminum plate, and Fig. 2(c) shows the photo of PDMS/HGBs composite coating film on glass plate. The illustration shows the water contact angle on the surface of the coated film.

Fig. 2 shows that the prepared PDMS/HGBs composite film has a matt, ultra-white appearance, excellent hiding power and good flexibility, and can be coated on aluminum or glass plates. Moreover, due to the low surface energy of PDMS and the multi-level structure of the coating layer surface, the prepared PDMS/HGBs composite film has good hydrophobicity.

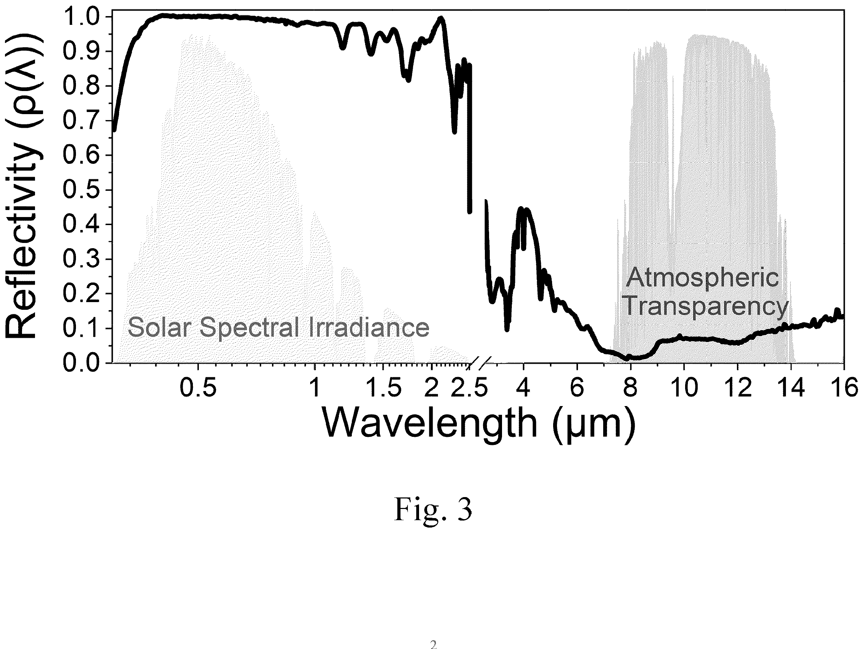

Fig. 3 shows the reflectance spectrum of PDMS/HGBs composite film at 0.3-16 µm wavelength in embodiment 1. The average solar reflectance of the composite film is as high as ∼ 0.96, and the long-wave infrared emissivity can reach ∼ 0.95, which indicates that the prepared PDMS/HGBs composite film hardly absorbs sunlight, and can greatly dissipate its own heat to the cold outer space, satisfying the basic optical requirements for passive radiant cooling during the day.

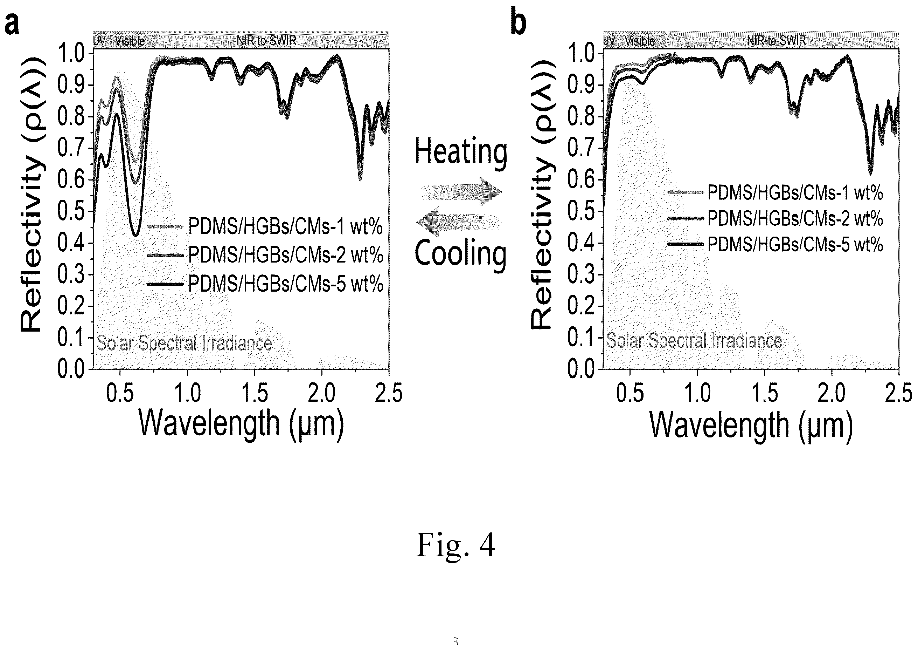

Fig. 4 shows the solar reflectance spectra of PDMS/HGBs/CMs composite film under cooling and heating conditions in embodiment 1, wherein Fig. 4(a) shows the solar reflectance spectrum of the composite coating film containing different concentrations of CMs in the cooling state; Fig. 4(b) shows the solar reflectance spectrum of the composite coating film containing different concentrations of CMs in the heating state.

Fig. 4 shows the solar reflectance spectra of PDMS/HGBs/CMs composite film under cooling and heating conditions. The dosage of HGBs is 50 wt%, the test temperature is 20 °C, and the critical color-change temperature of CMs is 25 °C. The results show that the average solar reflectance of the composite films with CMs content of 1 wt%, 2 wt%, and 5 wt% in the cooling state are 92.1%, 89.9%, and 87.9%, respectively, and the average solar reflectance in the heating state were 95.7%, 95.1% and 94.7%, respectively. It can be seen that for this type of PDMS/HGBs/CMs composite film/coating layer, the difference in average solar reflectance before and after the temperature change is 3.6-6.8%. It means that when the solar radiation intensity is ∼ 800 W/m², 54.4 W/m² of the solar radiation absorption can be reduced at the maximum, which is of great significance to realize the intelligent regulation of radiation cooling.

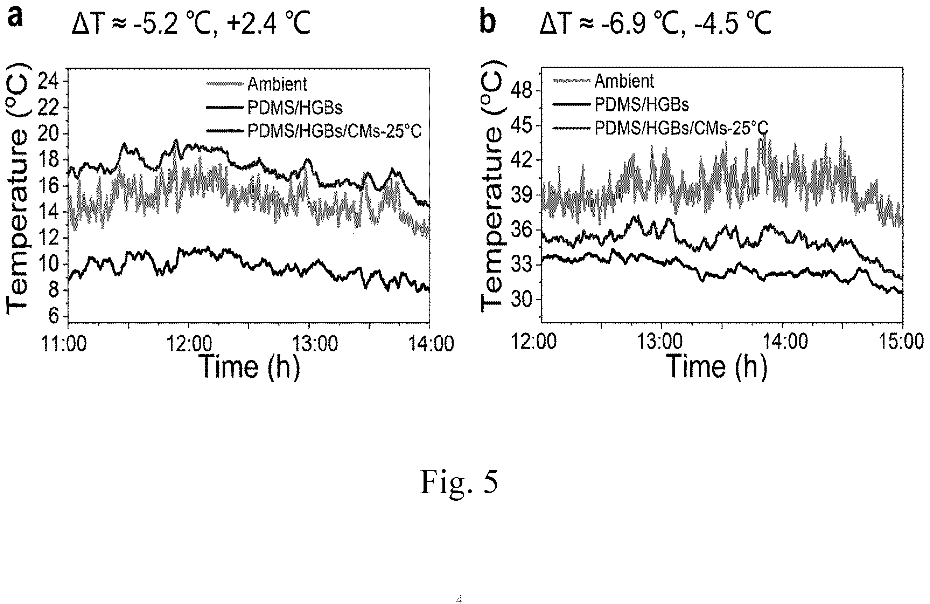

Fig. 5 shows the temperature tracking curve of environment, PDMS/HGBs and PDMS/HGBs/CMs composite film in embodiment 1, wherein the ambient temperature in Fig. 5(a) is about 14.9 °C, and the critical color-change temperature of CMs is 25 °C; the ambient temperature in Fig. 5(b) is about 39.5 °C, and the critical color-change temperature of CMs is 25 °C.

Fig. 5 compares the temperature tracking curves of PDMS/HGBs and PDMS/HGBs/CMs composite films at different ambient temperatures. It can be seen that when the ambient temperature is - 14.9 °C and when the critical color-change temperature of CMs is 25 °C, the PDMS/HGBs and PDMS/HGBs/CMs composite films are cooled by - 5.2 °C and heated by - 2.4 °C respectively. At this time, PDMS/HGBs/ CMs composite film presents a colorful appearance. When the ambient temperature is - 39.5 °C and the critical color-change temperature of CMs is 25 °C, the PDMS/HGBs and PDMS/HGBs/CMs composite films are cooled by ∼6.9 °C and ∼ 4.5 °C respectively, and the PDMS/HGBs/CMs composite film presents an ultra-white appearance. It shows that the PDMS/HGBs/CMs composite film can freely switch between ultra-white and color as the ambient temperature changes, and independently and reversibly adjust its own cooling and heating mode, which is expected to truly achieve warmth in winter and coolness in summer.

### Embodiment 2

The experimental device and operation are the same as in embodiment 1. First weigh 10g water-based polyurethane (WPU) emulsion with a solid content of 48% and 5g HGBs, put them in 5g deionized water, and stir mechanically for 2h at room temperature to obtain a dispersion liquid of WPU/HGBs/water; Then, coat the above dispersion liquid on wood by pouring, after the solution is leveled, place it to dry overnight at room temperature to obtain WPU/HGBs composite film. The test methods of sample temperature and ambient temperature are the same as in embodiment 1.

### Embodiment 3

First weigh 5g PDMS prepolymer, 0.5g curing agent (SYLGARD 184), 5g HGBs and 0.2g CMs (critical color-change temperature is 18 °C, 25 °C and 28 °C, respectively, and the color is pink), put them in 10g toluene solvent, and disperse with a homogenizer for 10min at room temperature to obtain a dispersion liquid of PDMS/HGBs/CMs/toluene; Then, coat the above dispersion liquid on a plastic plate by spin coating. After the solution is leveled, place it in an oven at 100°C for drying, take it out after 2 hours, and obtain a PDMS/HGBs/CMs composite coating layer; Finally, peel the PDMS/HGBs/CMs composite coating layer from the plastic plate to obtain the PDMS/HGBs/CMs composite film. At the same time, the PDMS/HGBs composite film without CMs is prepared by the above method as a reference. The test methods of sample temperature and ambient temperature are the same as in embodiment 1.

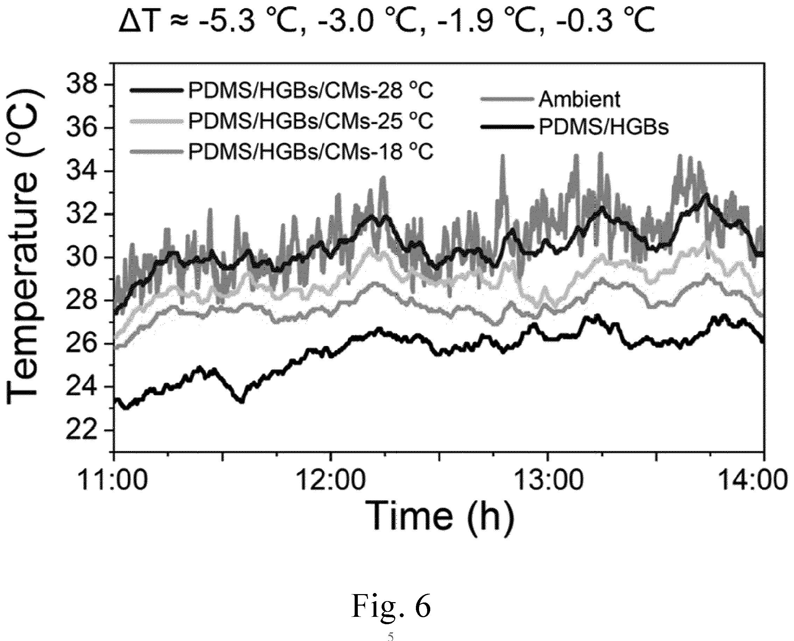

Fig. 6 shows the temperature tracking curve of environment, PDMS/HGBs and PDMS/HGBs/CMs composite film in embodiment 3, wherein the ambient temperature is about 30.8 °C, and the critical color-change temperatures of CMs are 18, 25, and 28 °C, respectively.

Fig. 6 compares the temperature tracing curves of the PDMS/HGBs composite coating film and the PDMS/HGBs/CMs composite coating film with different critical color-change temperatures. It can be seen that when the ambient temperature is - 30.8 °C, which is higher than the critical color-change temperature of CMs, PDMS/HGBs, PDMS/HGBs/CMs (18°C), PDMS/HGBs/CMs (25°C) and PDMS/HGBs /CMs (28°C) composite coating films all present an ultra-white appearance and have excellent passive radiation cooling performance during the day, respectively cooling down by ∼5.3 °C, ∼3.0 °C, ∼1.9 °C and ∼0.3 °C. The results show that the greater the difference between the ambient temperature and the critical color-change temperature of CMs are, the more obvious the cooling effect is.

### Embodiment 4

First weigh 5g PDMS prepolymer, 0.5g curing agent (SYLGARD 184), 4g HGBs and 1g barium sulfate nanoparticles (BaSO4, 400 nm), put them in 10g toluene solvent, and stir magnetically for 2h at room temperature to obtain a dispersion liquid of PDMS/HGBs/ BaSO4/toluene. Then, coat the above dispersion liquid on paper by spin coating. After the solution is leveled, place it in an oven at 100 °C for drying, take it out after 2 hours, and obtain a PDMS/HGBs/BaSO4 composite coating layer. Finally, peel the PDMS/HGBs/BaSO4 composite coating layer from the paper to obtain the PDMS/HGBs/BaSO4 composite film. The test methods of sample temperature and ambient temperature are the same as in embodiment 1.

### Embodiment 5

The experimental device and operation are the same as in embodiment 1. First weigh 5g polymethyl methacrylate (PMMA) plastic particles and 4g HGBs, put them in 10g acetone solvent, and stir magnetically at 50 °C for 2h to obtain a dispersion liquid of PMMA/HGBs/acetone; Then, spray the above dispersion liquid on the concrete surface and dried at room temperature to obtain the PMMA/HGBs composite film. The test methods of sample temperature and ambient temperature are the same as in embodiment 1.

According to the white coating material, the intelligent thermochromic coating material and the coating layer provided by the embodiments of the present invention, due to the abundant multi-level cavity structure of the hollow glass beads, the intelligent thermochromic coating material and the coating layer can effectively scatter sunlight and increase thermal emissivity. Their optical properties, whiteness, hiding power, etc. are better than traditional white coating layers based on titanium dioxide. In addition, the ideal inherent properties of the polymer itself, such as almost no absorption of sunlight, various functional groups and a large number of infrared absorption/emission peaks caused by their vibration modes, can enhance the emissivity of the material in the long-wave infrared. Therefore, the prepared polymer-based HGBs film (that is, the coating layer) has an average reflectivity of up to about 0.96 in the solar spectrum, and a long-wave infrared emissivity of about 0.95, which is excellent in optical properties, whiteness, and coverage. In terms of strength, it is superior to commercial white coating materials based on titanium dioxide. It is not only non-toxic, environmentally friendly and low in cost, but the coating film also has an obvious cooling effect. At night, its own temperature can be 3 °C ∼ 8 °C lower than the ambient temperature, and it can still cool down by 2 °C ∼ 7 °C under direct sunlight at noon.

In addition, due to the temperature-sensitive properties of the reversible thermochromic microcapsules, the coating layer prepared by adding the reversible thermochromic microcapsules (i.e., the thermochromic coating layer) can switch freely between ultra-white and color as the ambient temperature changes. The free switching between colors not only gives the traditional radiant cooling material a more ornamental appearance, but also realizes the intelligent adjustment of the dual modes of solar heating and passive radiant cooling. As shown in Fig. 5 and Fig. 6, when the ambient temperature is lower than the critical color-change temperature of the thermochromic microcapsules, the coating layer presents a colorful appearance and selectively absorbs visible light of a specific wavelength to heat itself; when the ambient temperature is higher than the critical color-change temperature of the thermochromic microcapsules, the coating layer presents an ultra-white appearance, highly reflects the entire wavelength of sunlight, and radiates infrared heat, thereby cooling itself.

The embodiments of the present invention provide a simple, cheap, and universal film preparation method. A simple mechanical stirring blending method is adopted to blend environmentally friendly and cheap hollow glass beads with resin to obtain a coating layer dispersion system. Methods such as spraying, roll coating and spin coating are used on plastic, glass, wood, metal, concrete and other substrate materials to prepare films. The method has the advantages of simple preparation process, environment-friendly and cheap raw materials, and low production cost. Thus, it is suitable for large-scale preparation; it is suitable for all kinds of common water-based and solvent-based resin systems; the prepared film has excellent passive radiation cooling performance and environmental temperature responsiveness, and can realize two-way adjustment of cooling and heating. As a new type of refrigeration technology, it is expected to reduce or replace traditional electric cooling/heating systems, and truly realize energy-free warming in winter and cooling in summer.

According to an aspect, there is provided a white coating material without titanium dioxide, characterized by comprising 10 wt% ∼ 70 wt% hollow glass beads; and 30 wt% ∼ 90 wt% resin.

In some embodiments, the diameter of said hollow glass beads ranges in 2 µm ∼ 30 µm, and the main component of said hollow glass beads is soda-lime borosilicate glass.

In some embodiments, said resin is water-soluble resin or solvent-based resin.

In some embodiments, said resin is any one or more of polydimethylsiloxane, polyurethane, polyacrylate, polymethylmethacrylate, epoxy resin, polyvinylidene fluoride, polytetrafluoroethylene and silicone resin.

In some embodiments, the white coating material without titanium dioxide is coated on the surface of a substrate material to form said coating layer, wherein the average solar reflectance of said coating layer ≥ 0.90, the longwave infrared emissivity ≥ 0.90, its own temperature is 3 °C∼8 °C lower than the ambient temperature at night, and its own temperature is 2°C∼7°C lower than the ambient temperature at noon.

According to an aspect, there is provided an intelligent thermochromic coating material, characterized by: comprising 10 ∼ 70 parts by weight of hollow glass beads; 30 - 90 parts by weight of resin; and 0.5 - 5 parts by weight of reversible thermochromic microcapsules.

In some embodiments, the diameter of said hollow glass beads ranges in 2 µm ∼ 30 µm, and the main component of said hollow glass beads is soda-lime borosilicate glass.

In some embodiments, said resin is water-soluble resin or solvent-based resin.

In some embodiments, said intelligent thermochromic coating material further comprises other fillers, said fillers are any one or more of barium sulfate, calcium carbonate, lithopone, talcum powder or titanium dioxide.

According to an aspect, there is provided a cotating layer in whcih the intelligent thermochromic coating material is coated on the surface of a substrate material to form said coating layer, wherein said coating layer switches between ultra-white and color as the ambient temperature changes to realize intelligent cooling/heating.

The foregoing embodiments are preferred cases of the present invention, and are not used to limit the protection scope of the present invention.

## Claims

1. A white coating material, **characterized by** comprising 10 wt% ∼ 70 wt% hollow glass beads; and 30 wt% ∼ 90 wt% resin.

2. The white coating material according to claim 1, **characterized by** that:
wherein the diameter of said hollow glass beads ranges in 2 µm ∼ 30 µm, the main component of said hollow glass beads is soda-lime borosilicate glass.

3. The white coating material according to claim 1, **characterized by** that:
wherein said resin is water-soluble resin or solvent-based resin.

4. The white coating material according to claim 1, **characterized by** that:
wherein said resin is any one or more of polydimethylsiloxane, polyurethane, polyacrylate, polymethylmethacrylate, epoxy resin, polyvinylidene fluoride, polytetrafluoroethylene and silicone resin.

5. A coating layer, **characterized by** that: the white coating material according to any one of claims 1-4 is coated on the surface of a substrate material to form said coating layer,
wherein the average solar reflectance of said coating layer ≥ 0.90, the longwave infrared emissivity ≥ 0.90, its own temperature is 3°C∼8°C lower than the ambient temperature at night, and its own temperature is 2°C∼7°C lower than the ambient temperature at noon.

6. An intelligent thermochromic coating material, **characterized by** that:
comprising 10 ∼ 70 parts by weight of hollow glass beads; 30 ∼ 90 parts by weight of resin; and 0.5 ∼ 5 parts by weight of reversible thermochromic microcapsules.

7. The intelligent thermochromic coating material according to claim 6, **characterized by** that:
wherein the diameter of said hollow glass beads ranges in 2 µm ∼ 30 µm, the main component of said hollow glass beads is soda-lime borosilicate glass.

8. The intelligent thermochromic coating material according to claim 7, **characterized by** that:
wherein said resin is water-soluble resin or solvent-based resin.

9. The intelligent thermochromic coating material according to claim 6, **characterized by** that:
wherein said intelligent thermochromic coating material further comprises other fillers, said fillers are any one or more of barium sulfate, calcium carbonate, lithopone, talcum powder or titanium dioxide.

10. A coating layer, **characterized by** that: the intelligent thermochromic coating material according to any one of claims 6-9 is coated on the surface of a substrate material to form said coating layer,
wherein said coating layer switches between ultra-white and color as the ambient temperature changes to realize intelligent cooling/heating.

## Amended claims

### Amended claims in accordance with Rule 137(2) EPC.

1. A white coating material, **characterized by** comprising 40-70 parts by weight of hollow glass beads; and 30-50 parts by weight of resin,
wherein a diameter of said hollow glass beads ranges in 2 µm - 30 µm, and a component of said hollow glass beads includes soda-lime borosilicate glass.

2. The white coating material according to claim 1, **characterized by** that:
wherein said resin is any one or more of polydimethylsiloxane, polyurethane, polyacrylate, polymethylmethacrylate, epoxy resin, polyvinylidene fluoride, polytetrafluoroethylene and silicone resin.

3. A coating layer, **characterized by** that: the white coating material according to claim 1 or claim 2 is coated on the surface of a substrate material to form said coating layer,
wherein the average solar reflectance of said coating layer ≥ 0.90, the longwave infrared emissivity ≥ 0.90, its own temperature is 3°C-8°C lower than the ambient temperature at night, and its own temperature is 2°C-7°C lower than the ambient temperature at noon.

4. An intelligent thermochromic coating material, **characterized by** that: comprising 40-70 parts by weight of hollow glass beads; 30-50 parts by weight of resin; and 0.5-5 parts by weight of reversible thermochromic microcapsules,
wherein a diameter of said hollow glass beads ranges in 2 µm - 30 µm, a component of said hollow glass beads includes soda-lime borosilicate glass.

5. The intelligent thermochromic coating material according to claim 4, **characterized by** that:
wherein said intelligent thermochromic coating material further comprises other fillers, said fillers are any one or more of barium sulfate, calcium carbonate, lithopone, talcum powder or titanium dioxide.

6. A coating layer, **characterized by** that: the intelligent thermochromic coating material according to claim 4 or claim 5 is coated on the surface of a substrate material to form said coating layer,
wherein said coating layer switches between ultra-white and color as the ambient temperature changes to realize intelligent cooling/heating.
